(19) Europäisches Patentamt
European Patent Office
Office européen des brevets

(11) Publication number: **0 119 686**
**A1**

# (12) EUROPEAN PATENT APPLICATION

(21) Application number: **84300359.1**

(22) Date of filing: **20.01.84**

(51) Int. Cl.³: **C 01 B 11/02**

(30) Priority: **26.01.83 US 461097**

(43) Date of publication of application: **26.09.84**
**Bulletin 84/39**

(84) Designated Contracting States: **BE DE FR GB IT NL SE**

(71) Applicant: **CALGON CORPORATION,**
**Route 60-Campbell's Run Road, Robinson Township**
**Pennsylvania 15205 (US)**

(72) Inventor: **Peace, Robert L., 57 Kathleen Drive, McKees Rocks Pennsylvania 15136 (US)**
Inventor: **Stewart, Dennis A., 134 Dover Drive, Coraopolis Pennsylvania 15108 (US)**

(74) Representative: **Crampton, Keith John Allen et al, D YOUNG & CO 10 Staple Inn, London WC1V 7RD (GB)**

## (54) Chlorine dioxide generation apparatus and process.

(57) Chlorine dioxide is produced by

(a) drawing via a vacuum, hydrochloric acid and sodium chlorite solution from separate storage containers (3,2) through restriction means which allow for the regulation of flow rates, to a point where the hydrochloric acid and sodium chlorite are commingled before being drawn into a generator column (9);

(b) drawing the hydrochloric acid and sodium chlorite mixture into the generator column (9) where they are allowed to mix and substantially react;

(c) drawing, from the top of the generator column, chlorine dioxide gas, sodium chloride, any unreacted hydrochloric acid and sodium chlorite and any other reaction by-products, by means of a vacuum created by motive water (16) passing through an eductor (1); and

(d) intermittently interrupting the drawing of hydrochloric acid and sodium chlorite to the generator column (9) and subsequently allowing flush water to be drawn from a point to the generator column (12) to remove the reactants and any salts that may have formed.

Apparatus for the production of chlorine dioxide comprises

(a) at least two storage containers (2,3) connected via lines equipped with flow restriction means (4,5) to

(b) a commingling juncture (8) with an outlet (12) connected to the bottom of

(c) a generator column (9) with an outlet (17) on top connected to

(d) an eductor (1) for drawing a vacuum and

(e) at least one flush water means (12) situated between at least one of the storage containers (2,3) and the generator column (9).

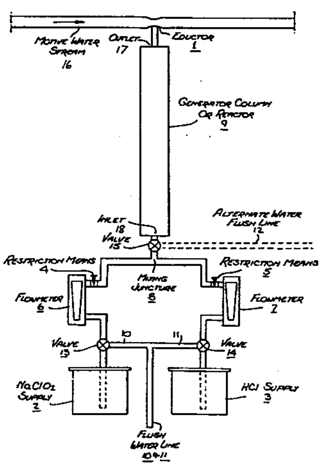


EP 0 119 686 A1

# "CHLORINE DIOXIDE GENERATION APPARATUS AND PROCESS"

Chlorine dioxide is utilized in a variety of processes, including a large number of bactericidal applications, especially in the fields of water treatment and odor abatement. Its usage is continuing to grow for many reasons. Owing to the unstable nature of gaseous chlorine dioxide, it is necessary to produce chlorine dioxide on site, rather than to produce it at a central plant and ship it for usage when needed.

U.S. Patent 4,292,292 discloses a process for the production of chlorine dioxide from hydrochloric acid and sodium chlorite. U.S. Patents 4,013,761; 4,250,144 and 4,247,531 disclose the production of chlorine dioxide from sodium chlorite and chlorine gas or sodium hypochlorite.

Known chlorine dioxide generators have been plagued with explosions and fires, and expose their operators to hazardous chemicals.

The present invention provides a process for the production of chlorine dioxide, comprising

(a) drawing, via a vacuum, hydrochloric acid and sodium chlorite solution from separate storage containers, through restriction means which allow for the regulation of flow rates, to a point where the hydrochloric acid and sodium chlorite are commingled before being drawn into a generator column;

(b) drawing the hydrochloric acid and sodium chlorite mixture into the generator column where they are allowed to mix and substantially react;

(c) drawing, from the top of the generator column, chlorine dioxide gas, sodium chloride, any unreacted hydrochloric acid and sodium chlorite and any other reaction by-products, by means of a vacuum created by motive water passing through an eductor; and

(d) intermittently interrupting the drawing of hydrochloric acid and sodium chlorite to the generator column and subsequently allowing flush water to be drawn from a point prior to the generator column to remove the reactants and any salts that may have formed.

In this process, chlorine dioxide is produced by the following reaction:

$$5NaClO_2 + 4HCl = 4ClO_2 + 5NaCl + 2H_2O$$

The invention also provides an apparatus for the production of chlorine dioxide, comprising

(a) at least two storage containers connected via lines equipped with flow restriction means to

(b) a commingling juncture with an outlet connection to the bottom of

(c) a generator column with an outlet on top connected to

(d) an eductor for drawing a vacuum and

(e) at least one flush water means situated between at least one of the storage containers and the generator column.

By using the method and apparatus of the present invention, it is possible to avoid the explosion and fire risks and exposure to hazardous chemicals of the prior art. The location of the eductor on the top of the generator column is critical to eliminating any buildup of stagnant chlorine dioxide in the generator column. Also, the controlled intermittent flushing of the generator column removes any accumulation of sodium chloride, which can clog the equipment, and purges the generator and eductor of chlorine dioxide and spent reactants, which can cause excessive pressure, danger of explosion and inadvertent exposure of the operators to hazardous chemicals.

The single Figure of the accompanying drawings depicts an illustrative embodiment of apparatus in accordance with the invention. In the Figure, sodium chlorite and hydrochloric acid are drawn or pulled by a vacuum created by an eductor (1) to a mixing juncture (8) from two separate storage containers (2 and 3). The rate of flow may be controlled via restriction means (4 and 5) located in the feed lines, such as a needle valve. The feed lines may also optionally have flow meters (6 and 7) associated with them to measure the rate of flow of reactants. Usually, the restriction means and flow meter are combined as a single device. The sodium chlorite is used as a solution, preferably a 10 to 20 weight percent solution, to allow solubility and prevent salt formation. The sodium chlorite and hydochloric acid (preferably concentrated hydrochloric acid) may be commingled at (8) solely by impingement or by a static mixer or any other type of mechanical

mixer. It is preferred that the reactants mix solely by impingement. The mixture of sodium chlorite and hydrochloric acid is then drawn or pulled into a generator column or reactor (9), via an inlet (18) preferably in the bottom of the generator column or reactor. The generator column should be designed to encourage mixing, for example, by containing baffles and/or packing. The generator column or reactor should be of sufficient size to allow the sodium chlorite and hydrochloric acid to substantially react to form chlorine dioxide. The reaction commences at the point of commingling, but requires a residence time to produce optimum conversion of the reactants to chlorine dioxide, usually a minimum of about 45 seconds. The rate of flow of motive water (16) through the eductor (1) is preferably substantially constant. The rate of flow of the reactants is regulated primarily by the restriction means (4 and 5). The chlorine dioxide produced in the reactor, together with the sodium chloride and any unreacted hydrochloric acid and unreacted sodium chlorite and any other reaction by-products, is pulled or drawn out of the top of the generator column or reactor by the vacuum created by the flow of water through the eductor (1). The outlet (17) from the generator column or reactor must be located at the top of the generator column so that there is no pocket for chlorine dioxide gas to form and build up in.

It is also critical to the safety of the apparatus that flush water lines (12) or (10) and/or (11) be provided at some point prior to the generator column. The flush water lines may also, alternatively (not shown), be located between the mixing junction (8) and the restriction means (4) and/or (5). Valves (13) and (14) or solely (15), preferably an automatic three-way valve, should be associated with the junction of the flush water lines (10) and (11) or (12) and the reactant feed lines. Although generally less convenient, rather than a three-way valve, a two-way valve may be placed in the reactant feed lines at a point upstream of the flush water inlet and a separate two-way valve placed in the flush water lines. The valves interrupt the flow of sodium chlorite and hydrochloric acid and allow the flush water to be educted through the system or any part of the system. The system may be flushed with water as often as desired. The flush water line may be placed at the inlet to the generator column or associated, at some point, with the sodium chlorite and/or hydrochloric acid feed lines.

The motive water is passed through the eductor at, preferably, a constant rate which will preferably allow for 10 to 50 pounds (4.5 to 22.7 kg) of chlorine dioxide per hour to be produced.

Although the molar ratio of hydrochloric acid to sodium chlorite is not critical, it is preferred that it be in the range of 2 to 4 moles, particularly 2.48 to 3.4 moles, of hydrochloric acid per mole of sodium chlorite.

The following Examples illustrate the process of the present invention.

Example 1:

The motive water was run at a rate of 50 gallons (189 litres) per minute. The reactant feed lines were restricted so as to allow 54 pounds (24.5 kg) per hour of concentrated hydrochloric acid and 112 pounds (50.8 kg) per hour of a 15 weight % sodium chlorite solution to be drawn or pulled via the eductor-created vacuum to a junction where they were mixed solely by impingement. The mixture was then drawn or pulled, by the vacuum created by the flow of the motive water through an eductor, into a generator column 4 ins x 4 feet (0.1 m x 1.22 m) containing baffles and packing. The mixture was then drawn or pulled into the motive water. The mixture produced 10 pounds (4.5 kg) of chlorine dioxide per hour. At the end of each feed cycle, which varied from 15 minutes to 4 hours, the reactants were totally restricted, by automatic three-way valving, from entering the restriction means and mixing juncture and then the feed pipes, mixing juncture and reactor column were flushed with water for fifteen minutes.

Example 2:

The procedure of Example 1 was repeated using 270 pounds (122.5 kg) per hour of concentrated hydrochloric acid and 560 pounds (254 kg) per hour of a 15 percent sodium chlorite solution. 50 pounds (22. 7 kg) per hour of chlorine dioxide was produced.

## CLAIMS

1. A process for the production of chlorine dioxide, comprising

(a) drawing via a vacuum, hydrochloric acid and sodium chlorite solution from separate storage containers (3, 2), through restriction means which allow for the regulation of flow rates, to a point where the hydrochloric acid and sodium chlorite are commingled before being drawn into a generator column (9);

(b) drawing the hydrochloric acid and sodium chlorite mixture into the generator column (9) where they are allowed to mix and substantially react;

(c) drawing, from the top of the generator column, chlorine dioxide gas, sodium chloride, any unreacted hydrochloric acid and sodium chlorite and any other reaction by-products, by means of a vacuum created by motive water (16) passing through an eductor (1); and

(d) intermittently interrupting the drawing of hydrochloric acid and sodium chlorite to the generator column (9) and subsequently allowing flush water to be drawn from a point prior to the generator column (12) to remove the reactants and any salts that may have formed.

2. A process as claimed in claim 1, in which 10 to 50 pounds (4.5 to 22.7 kg) of chlorine dioxide per hour is produced.

3. A process as claimed in claim 1 or claim 2 in which the hydrochloric acid and sodium chlorite mixture are drawn into the bottom of the generator column.

4. A process as claimed in any preceding claim in which the flush water is drawn in at, before, or after the point of commingling, but before the generator column.

5. A process as claimed in claim 4 in which the flush water is drawn into the sodium chlorite and hydrochloric acid feed lines prior to the point of commingling.

6. A process as claimed in any preceding claim in which the motive water is passed through said eductor at a constant rate.

7. An apparatus for the production of chlorine dioxide, comprising:

(a) at least two storage containers (2, 3) connected via lines equipped with flow restriction means (4, 5) to

(b) a commingling juncture (8) with an outlet (12) connected to the bottom of

(c) a generator column (9) with an outlet (17) on top connected to

(d) an eductor (1) for drawing a vacuum and

(e) at least one flush water means (12) situated between at least one of the storage containers (2, 3) and the generator column (9).

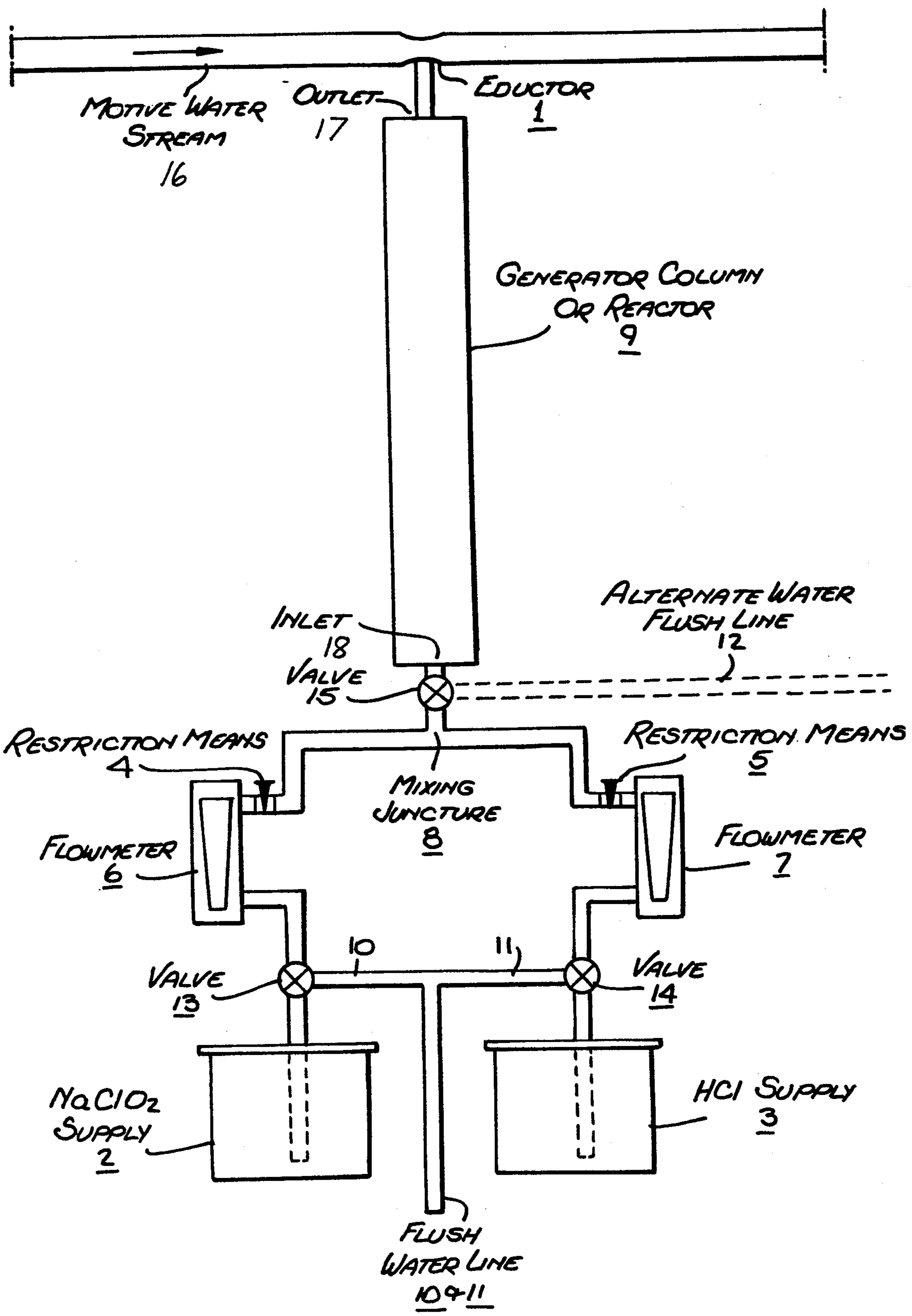

Motive Water Stream 16
Outlet 17
Eductor 1
Generator Column Or Reactor 9
Inlet 18
Valve 15
Alternate Water Flush Line 12
Restriction Means 4
Restriction Means 5
Mixing Juncture 8
Flowmeter 6
Flowmeter 7
10
11
Valve 13
Valve 14
$NaClO_2$ Supply 2
HCl Supply 3
Flush Water Line 10 & 11

0119686

European Patent Office

# EUROPEAN SEARCH REPORT

Application number

EP 84 30 0359

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | EP-A-0 024 851 (RIO LINDA) * Figure 1 and its description; page 3, line 21 - page 4, line 13 * & US-A-4 247 531 (Cat. D, Y) | 1,3-7 | C 01 B 11/02 |
| Y | BE-A- 757 426 (SOLVAY) * Figure 3; page 3, lines 16-28 * | 1,3-7 | |
| A | US-A-2 344 346 (C.H. EVANS) * Figure * | | |
| D,A | US-A-4 292 292 (B.W. HICKS et al.) | | |
| D,A | US-A-4 250 144 (B.J. RATIGAN) | | TECHNICAL FIELDS SEARCHED (Int. Cl. 3) |
| D,A | US-A-4 013 761 (W.J. WARD et al.) | | C 01 B 11/00 |

The present search report has been drawn up for all claims

| Place of search | Date of completion of the search | Examiner |
|---|---|---|
| BERLIN | 03-05-1984 | KESTEN W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82